# EUROPEAN PATENT APPLICATION

(11) **EP 2 752 379 A1**
(43) Date of publication of application: **09.07.2014**
(21) Application number: 11871618.2
(22) Date of filing: 30.08.2011
(51) Int. Cl.: B65G 47/80, B05B 13/02, B25J 13/00, B25J 19/00

(54) **CONVEYANCE DEVICE AND ROBOT SYSTEM**

(71) Applicant: Kabushiki Kaisha Yaskawa Denki, Kitakyushu-shi, Fukuoka 806-0004 (JP)
(72) Inventor: FURUYA, Kouji, Kitakyushu-shi Fukuoka 806-0004 (JP); MIURA, Hironobu, Kitakyushu-shi Fukuoka 806-0004 (JP); HASHIMOTO, Kenichi, Kitakyushu-shi Fukuoka 806-0004 (JP)
(74) Representative: Grünecker, Kinkeldey, Stockmair & Schwanhäusser
(86) International application number: PCT/JP2011/069639
(87) International publication number: WO 2013/030958

(57) **Abstract**

Provided a conveyance apparatus(1) in which the rotation of a turn table(12) is locked except when the turn table(12) is located at a working positions(41) and a robot system(3).

The conveyance apparatus includes: a swing arm (11) whose distal end portion passes on a carrying-in/out position (40) and a working position (41) while being swung, which are provided on a circular trajectory in advance, a plurality of turn tables (12) each of which is mounted on the corresponding distal end portion of the swing arm (11), the turn tables revolving along the circular trajectory and being rotatable on the axis thereof at the mounted position in the horizontal direction in a state that a workpiece (5) is placed on the turn table, and a rotation locking mechanism (10) that locks the rotation of the turn table (12) on the axis except when the turn table (12) is located at the working position (41).

## Description

### Field

Embodiments disclosed herein are directed to a conveyance apparatus and a robot system.

### Background

Conventionally, there has been known a conveyance apparatus provided with a swing arm whose distal end portion passes through a carrying-in/out position and a working position that are provided in advance in a circular trajectory while the swing arm is swung, and a pair of turn tables mounted on the respective end portions of the swing arm and moved along the circular trajectory (see Patent Literature 1, for example).

The conveyance apparatus disclosed in Patent Literature 1 includes an arm drive source that rotates the swing arm and a table drive source that rotates the turn table. The table drive source enables each turn table to rotate on the axis of the turn table in a horizontal direction at a position in which the turn table is mounted in a state that a workpiece to be worked is placed on the turn table.

Furthermore, the above-mentioned conveyance apparatus allows the turn tables to move along the circular trajectory by using a base gear, and drives each turn table by a specific gear shifted from the base gear at the working position to rotate the turn table on the axis of the turn table by way of the specific gear. On the other hand, the rotation of the turn table at the carrying-in/out position is mechanically prevented by the specific gear engaged with the base gear.

With the use of the conveyance apparatus constituted as above, it is possible to swing the swing arm, convey the workpiece placed on one turn table from the carrying-in/out position to the working position, and perform a predetermined operation such as a coating operation while horizontally rotating the turn table at the working position. On the other hand, it is possible to locate the other turn table at the carrying-in/out position in a state that the turn table is fixed and to place a workpiece to be coated next on the turn table.

### Citation List

### Patent Literature

Patent Literature 1: Japanese Patent No. 4190631

### Summary

### Technical Problem

However, the conveyance apparatus disclosed in Patent Literature 1 is constituted such that the turn table is fixed only when the turn table is located at the carrying-in/out position, and rotated on the axis thereof in the course of a movement from the working position to the carrying-in/out position or from the carrying-in/out position to the working position.

Furthermore, a mechanism capable of rotating only one turn table located at the working position on the axis of the turn table and preventing the rotation of the other turn table located at the carrying-in/out position is a gear mechanism. Accordingly, for example, there exists a risk that the posture of a workpiece placed on a turn table located at the carrying-in/out position is azimuthally changed when the turn table is located at the working position due to the rotation of the turn table in the course of conveying the turn table to the working position.

Furthermore, when the turn table is located at the working position, the turn table is driven by the specific gear shifted from the base gear. Hence, due to a backlash of the gears and the like occurring when shifting from the base gear to the specific gear, there exists a risk that the mechanical lifetime of the conveyance apparatus is shortened.

A technique disclosed herein is made under such circumstances and it is an object of the present invention to provide a conveyance apparatus and a robot system in which the rotation of the turn table on the axis thereof is locked except for a case that the turn table is located at the working position.

### Solution to Problem

According to an embodiment, a conveyance apparatus includes: a swing arm whose distal end portion passes on a carrying-in/out position while being swung, the positions being provided on a circular trajectory in advance; a turn table that is mounted on the distal end portion of the swing arm, the turn table revolving along the circular trajectory and being rotatable on an axis thereof at a mounted position in a horizontal direction in a state that a workpiece is placed on the turn table; and a rotation locking mechanism that locks rotation of the turn table on the axis except when the turn table is located at the working position.

### Advantageous Effects of Invention

According to each one mode of a conveyance robot and a robot system that are disclosed in the present application, the posture of a workpiece located at a carrying-in/out position is prevented from azimuthally changing from the posture of the workpiece located at a working position and hence, even when the workpiece requires a precise work affected by the posture of the workpiece, the work can be performed efficiently.

### Brief Description of Drawings

FIG. 1 is an explanatory view illustrating a state of using a robot system according to an embodiment.
FIG. 2 is an explanatory view of the robot system in the embodiment.
FIG. 3 is an explanatory plan view of a conveyance apparatus in the embodiment.
FIG. 4 is an explanatory side view of the conveyance apparatus.
FIG. 5A is a schematic explanatory view illustrating a clutch mechanism and a swing arm locking mechanism of the conveyance apparatus.
FIG. 5B is a schematic explanatory view illustrating a clutch mechanism and a swing arm locking mechanism of the conveyance apparatus.
FIG. 6A is a schematic explanatory view illustrating a rotation locking mechanism of the conveyance apparatus.
FIG. 6B is a schematic explanatory view illustrating a rotation locking mechanism of the conveyance apparatus.
FIG. 7 is an explanatory view illustrating a state of using a robot system according to another embodiment.
FIG. 8 is an explanatory view illustrating a state of using a robot system according to the other embodiment.

### Description of Embodiments

Hereinafter, with reference to accompanying drawings, a conveyance robot and a robot system that are disclosed in the present application are explained in detail. However, the present invention is not limited to exemplifications in the following embodiments.

### Robot system

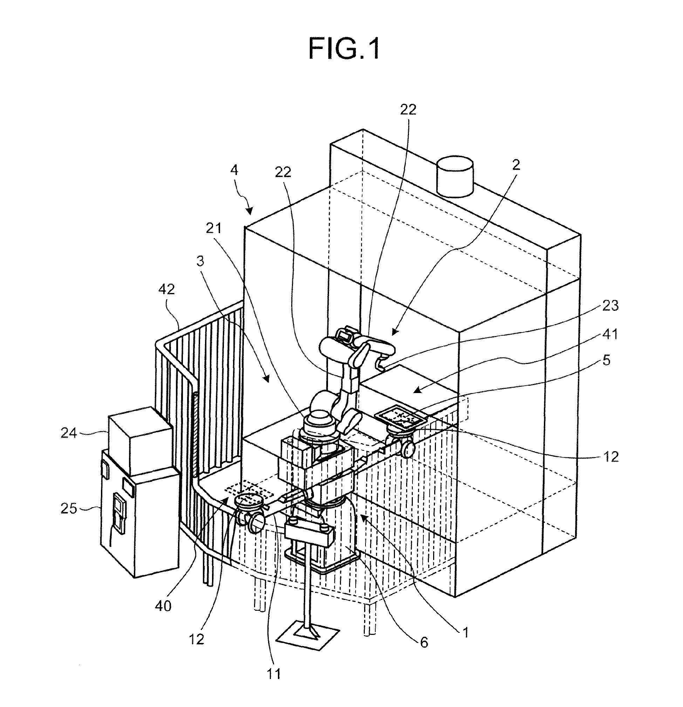

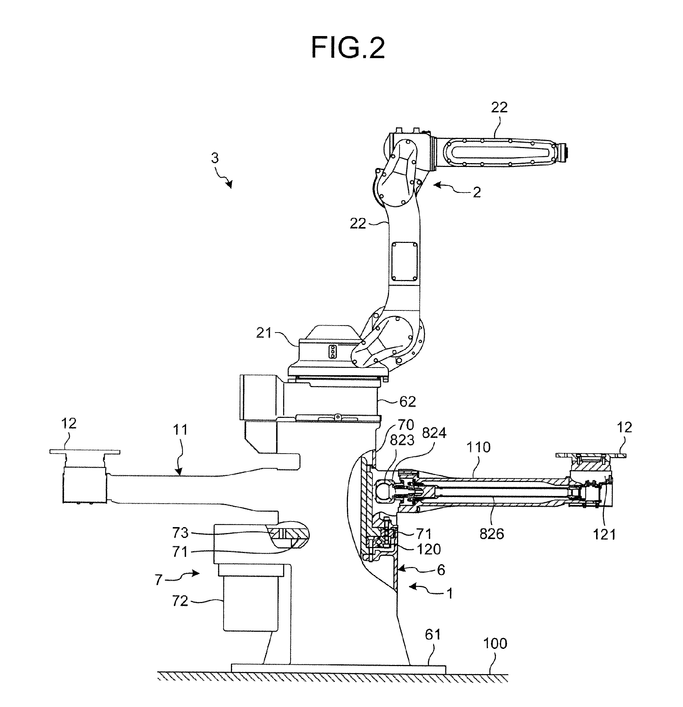

FIG. 1 is an explanatory view illustrating a state of using the robot system according to an embodiment. FIG. 2 is an explanatory view of the robot system in the embodiment. First of all, the outline of a robot system 3 according to the present embodiment is explained. As illustrated in the drawings, the robot system 3 is constituted of a conveyance apparatus 1 and a working robot 2 that are combined with each other and, as illustrated in FIG. 1, arranged in a working booth 4.

The working robot 2 used for the robot system 3 in the present embodiment is constituted of a six-axis articulated industrial robot and provided with a base part 21 mounted on the conveyance apparatus 1 and a robot arm 22 that extends from the base part 21. Here, the above-mentioned number of axes of the working robot 2 is merely one example, and not limited to six axes.

In the present embodiment, the robot system 3 is a robot for performing a coating operation on the surface of a workpiece 5 that is an object to be coated. Accordingly, a spray nozzle 23 is attached to the distal end of the robot arm 22. Here, in FIG. 2, the spray nozzle 23 that is an end effector is omitted. The end effector may be changed so as to enable the working robot 2 to perform various works.

As illustrated in FIG. 1, in the internal space of the working booth 4, a carrying-in/out position 40 for supplying the workpiece 5 uncoated and ejecting the workpiece 5 coated and a working position 41 at which coating treatment is performed by the working robot 2 are provided in advance in a circular trajectory corresponding to the swing trajectory of a swing arm 11 provided to a pedestal 6 of the conveyance apparatus 1 in a rotatable manner. Here, the conveyance apparatus 1 will be explained later. In the drawings, a numeral 42 indicates a safety fence that walls the working booth 4.

Furthermore, the robot system 3 in the present embodiment includes a spray console 24 in which a coating feeder for supplying a predetermined coating material to the spray nozzle 23 and an air feeder for supplying air for spraying the coating material to the spray nozzle 23 are housed. In addition, the robot system 3 includes a controller 25 that stores therein timing of spraying from the spray nozzle 23 and operation programs coded in advance to drive the working robot 2 by using predetermined operations.

The conveyance apparatus 1 includes the swing arm 11 whose distal end portion passes on the carrying-in/out position 40 and the working position 41 that are provided on the circular trajectory in advance while the swing arm 11 is swung and a pair of turn tables 12, 12 each of which is attached to each of both end portions of the swing arm 11 and moved along the circular trajectory. Each of the turn tables 12, 12 is constituted in such a manner that the turn table 12 can be rotated on the axis thereof in the horizontal direction at a position of the turn table 12 mounted on the swing arm 11 in a state that the workpiece 5 is placed on the turn table 12.

Here, in the present embodiment, timing of swinging the swing arm 11, timing of rotating the turn table 12, and the like can be also controlled by the above-mentioned operation program.

Due to such a constitution, in the robot system 3, the workpiece 5 is placed on one turn table 12 at the carrying-in/out position 40 and then, the swing arm 11 is swung 180 degrees to convey the workpiece 5 to the working position 41, and a coating work can be performed at the working position.

Furthermore, in performing the coating work, the turn table 12 is horizontally rotated thus uniformly coating the whole surface of the workpiece 5 having a three-dimensional surface.

When the coating work is performed at the working position 41, the workpiece 5 to be coated next is placed on the turn table 12 located at the carrying-in/out position 40. When the coating work is finished at the working position 41, the swing arm 11 is further swung 180 degrees to convey the workpiece 5 to the carrying-in/out position 40, and the workpiece 5 coated is carried out. In this case, the turn table 12 on which the workpiece 5 to be coated is previously placed at the carrying-in/out position 40 is located at the working position 41.

In this manner, in the robot system 3 according to the present embodiment, the coating work can be performed efficiently in accordance with the operation program. Furthermore, even when the surface of the workpiece 5 to be coated has an uneven three-dimensional shape, a coating treatment can be performed with a uniform coating film thickness.

Here, as the workpiece 5, for example, the casing of a mobile phone, the casing of a personal computer, or the instrument panel of a vehicle can be listed. However, the workpiece 5 may be any object as long as the object is to be coated and can be placed on each of the turn tables 12, 12 of the conveyance apparatus 1, the turn tables 12, 12 being described later.

### Conveyance apparatus

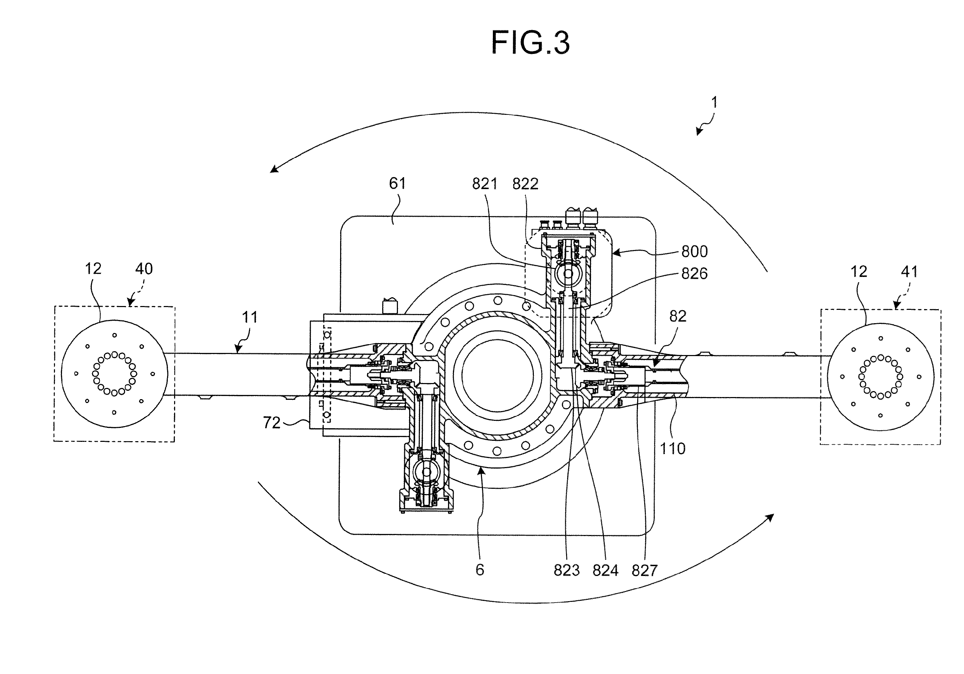

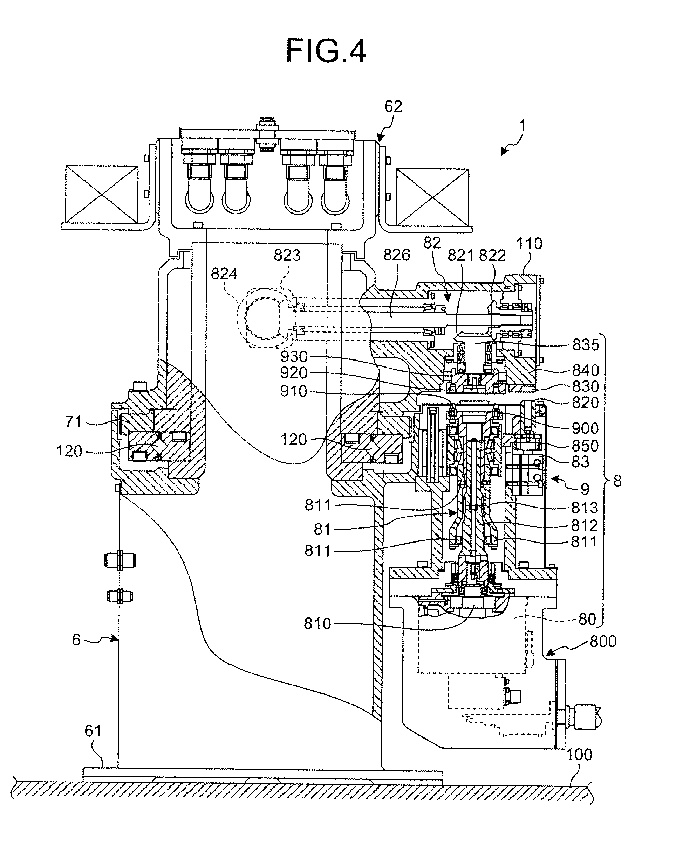

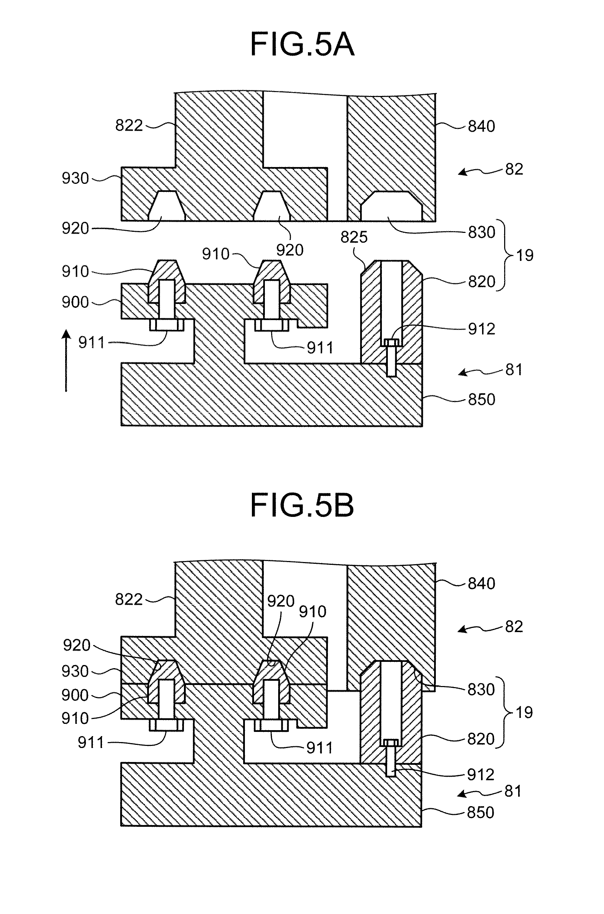

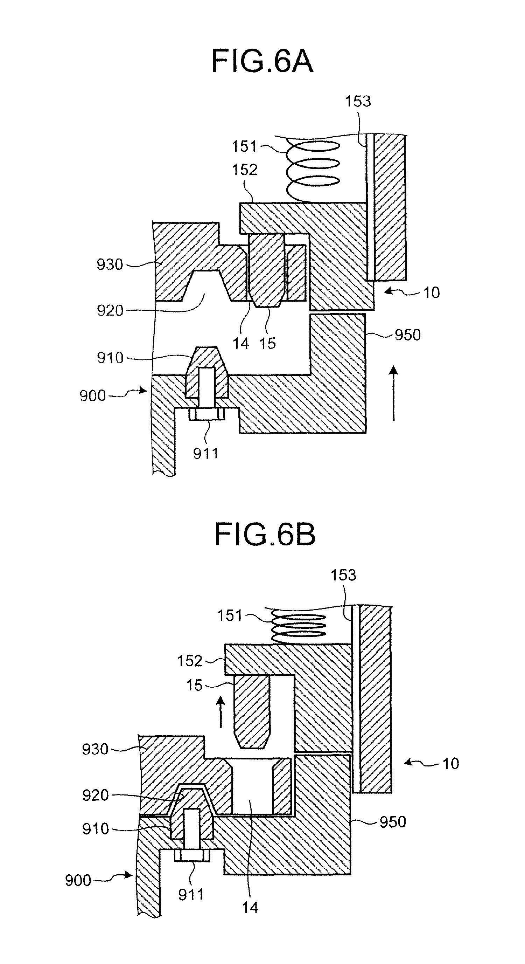

Next, the conveyance apparatus 1 according to the present embodiment is specifically explained with reference to FIG. 2 to FIG. 6B. FIG. 3 is an explanatory plan view of the conveyance apparatus 1 according to the present embodiment. FIG. 4 is an explanatory side view of the conveyance apparatus 1. Furthermore, FIG. 5A and FIG. 5B are schematic explanatory views each illustrating a clutch mechanism and a swing arm locking mechanism of the conveyance apparatus 1. In addition, FIG. 6A and FIG. 6B are schematic explanatory views each illustrating a rotation locking mechanism of the conveyance apparatus 1.

As illustrated in FIG. 2 to FIG. 4, the conveyance apparatus 1 includes the swing arm 11 mounted on the cylinder-shaped pedestal 6 provided with a installation base 61 on the lower end thereof and a robot-mounting base 62 on the upper end thereof in a swingable manner about the pedestal 6 by way of a swing mechanism 7. Here, in FIG. 2 and FIG. 4, a numeral 100 indicates an installation surface of the conveyance apparatus 1 in the working booth 4, and a numeral 120 indicates a bearing interposed between the swing arm 11 and an arm-supporting peripheral surface 70 of the pedestal 6.

The swing arm 11 is constituted such that the swing arm 11 linearly extends by way of the pedestal 6 and the pair of turn tables 12, 12 are attached to the respective ends of the swing arm 11. When the swing arm 11 is swung, the turn table 12 provided on each of both ends of the swing arm 11 passes through the carrying-in/out position 40 and the working position 41 that are located in an opposed manner with the pedestal 6 therebetween.

The swing mechanism 7 includes a ring gear 71 and a drive gear 73. The ring gear 71 is connected to the arm-supporting peripheral surface 70 of the pedestal 6 and is also connected to a base of the swing arm 11. The drive gear 73 is meshed with the ring gear 71 and is connected to the output shaft (not illustrated in the drawings) of a swing motor 72, which functions as a first power source, by way of a reduction gear (not illustrated in the drawings). Here, the swing motor 72 is, when the conveyance apparatus 1 is arranged in the inside of the working booth 4, attached to a side of the pedestal 6 that faces the carrying-in/out position 40 (see FIG. 2 and FIG. 3).

Due to such a constitution, when the swing motor 72 drives the swing arm 11, the swing arm 11 is rotated while both ends thereof move to trace a swing trajectory, and the turn table 12 mounted on each of both ends of the swing arm 11 moves between the carrying-in/out position 40 and the working position 41 along the circular trajectory. That is, the workpiece 5 placed on the turn table 12 can be conveyed from the carrying-in/out position 40 to the working position 41, or from the working position 41 to the carrying-in/out position 40.

Each turn table 12 is rotatable in the horizontal direction at the distal end portion of the swing arm 11; that is, at the position of the turn table 12 mounted on the swing arm 11. That is, the turn table 12 revolves along the circular trajectory and is rotatable on the axis thereof in the horizontal direction in a state that the workpiece 5 is placed on the turn table 12.

Here, a table rotation mechanism 8 that rotates the turn table 12 is explained. The table rotation mechanism 8 is, as illustrated in FIG. 4, provided with a table rotation motor 80 attached to the pedestal 6 as a second power source and a primary power transmission member 81 interlockingly connected to a rotational shaft 810 extending upwardly from the table rotation motor 80. In FIG. 4, a numeral 800 indicates a casing that houses the table rotation motor 80 and the primary power transmission member 81.

Furthermore, the table rotation mechanism 8 includes a secondary power transmission member 82 housed in the inside of an arm case 110 of the swing arm 11, and connected to the primary power transmission member 81 by way of a clutch mechanism 9.

That is, the rotational power of the table rotation motor 80 is selectively transmitted to the secondary power transmission member 82 interlockingly connected to the turn table 12 located at the working position 41 by way of the clutch mechanism 9 described in detail later.

In this manner, the table rotation mechanism 8 is capable of selectively transmitting the power from the table rotation motor 80 that is a second single power source that outputs power for rotating each of a pair of turn tables 12, 12 on the axis of the turn table 12 to the turn table 12 located at the working position 41 out of the pair of turn tables 12, 12.

Furthermore, the table rotation motor 80 is, when the conveyance apparatus 1 is arranged in the inside of the working booth 4, mounted on a side of the pedestal 6 that faces the working position 41 (see FIG. 3). Accordingly, the primary power transmission member 81 and the secondary power transmission member 82 that are constituted for rotating the turn table 12 on the axis of the turn table 12 and the table rotation motor 80 can be arranged adjacent to each other thus simplifying the whole constitution of the conveyance apparatus 1 as much as possible.

Here, with reference to FIG. 2 to FIG. 4, the table rotation mechanism 8 is explained in more detail.

As illustrated in FIG. 4, the primary power transmission member 81 arranged on a side close to the pedestal 6 connects a spline shaft 812 to the rotational shaft 810 of the table rotation motor 80 by way of a bearing 811, and fits a spline nut member 813 onto the spline shaft 812 in an axially slidable manner.

Furthermore, the spline nut member 813 is constituted such that the spline nut member 813 is interlockingly connected to an air cylinder 83 as an actuator of the clutch mechanism 9 so as to be operated reciprocally in a vertically movable manner and, at the same time, connects an engaging plate 900 provided with engaging pins 910, 910 arranged adjacent to each other in a predetermined spaced apart manner to the upper end portion thereof.

On the other hand, as illustrated in FIG. 2 to FIG. 4, the secondary power transmission member 82 arranged on a side close to the swing arm 11 is provided corresponding to each of the pair of turn tables 12, 12 that are provided in a state that the pedestal 6 is sandwiched between the turn tables 12, 12. That is, a pair of the secondary power transmission members 82 are configured to sandwich the pedestal 6 in such a manner that the members are interlockingly connected to the respective turn tables 12.

Each of the secondary power transmission members 82 is provided with an engaged plate 930 in which engagement holes 920, 920 for being engaged with engagement pins 910, 910 are formed and a connecting shaft 835 that connects the engaged plate 930 to the lower end thereof and a first bevel gear 821 to the upper end thereof.

Furthermore, the secondary power transmission member 82 has an intermediate shaft 826 that fixedly mounts a second bevel gear 822 that is meshed with the first bevel gear 821 in the orthogonal direction on the proximal end side thereof and extends toward the center of the pedestal 6 in the horizontal direction.

There is provided a third bevel gear 823 mounted on the distal end side of the intermediate shaft 826. The third bevel gear 823 is meshed with a fourth bevel gear 824 connected to the proximal end of a rotational shaft 827 extending in the longitudinal direction of the swing arm 11 so as to be interlockingly connected to a rotational shaft body 121 of the turn table 12.

That is, the power of the table rotation motor 80 mounted on the pedestal 6is transmitted from the rotational shaft 810 to the spline shaft 812 (the spline nut member 813) as torque, and transmitted in a disengageable manner through the first bevel gear 821, the second bevel gear 822, the intermediate shaft 826, the third bevel gear 823, the fourth bevel gear 824, the rotational shaft 827, and the turn table 12 in the order given above by way of the clutch mechanism 9.

That is, the clutch mechanism 9 capable of transmitting the power of the table rotation motor 80 to the turn table 12 located at the working position in a disengageable manner is, in the present embodiment, constituted of the air cylinder 83, the spline nut member 813, the engaging plate 900, and the engaged plate 930.

Therefore, the operation of the air cylinder 83 engages the engagement pins 910, 910 of the engaging plate 900 with the engagement holes 920, 920 of the engaged plate 930 thus transmitting the power of the table rotation motor 80 from the primary power transmission member 81 to the secondary power transmission member 82.

Furthermore, the conveyance apparatus 1 according to the present embodiment includes a swing arm locking mechanism 19 that locks the swing motion of the swing arm 11 when the turn table 12 is located at the working position 41.

The swing arm locking mechanism 19 is, as illustrated in FIG. 4, constituted of an arm locking pin 820 that is a second locking pin fixedly connected to the primary power transmission member 81 located on the pedestal 6 side and an arm locking hole 830 provided on an arm forming member 840 fixed on the swing arm 11 side, on the upper side of the air cylinder 83.

That is, the arm locking pin 820 is, as illustrated in FIG. 5A and FIG. 5B, protruded from an elevation member 850 constituted so that the elevation member 850 is vertically movable by the air cylinder 83 (see FIG. 4) together with the engaging plate 900 from which the engaging pins 910, 910 are protruded.

When the turn tables 12, 12 are not located at the carrying-in/out position 40 or the working position 41, as illustrated in FIG. 5A, the engaging plate 900 located on the pedestal 6 side of the table rotation mechanism 8 and the engaged plate 930 located on the swing arm 11 side of the table rotation mechanism 8 are spaced apart from each other. However, when the turn tables 12, 12 are located at the carrying-in/out position 40 and the working position 41, respectively, the air cylinder 83 is operated to elevate the engaging plate 900 together with the elevation member 850 and, as illustrated in FIG. 5B, the engagement pins 910, 910 are fitted into and engaged with the engagement holes 920, 920, respectively.

Therefore, the power of the table rotation motor 80 is in a state that it can be transmitted to the turn table 12 located at the working position 41 by way of the secondary power transmission member 82. Furthermore, at the same time, the arm locking pin 820 is fitted into the arm locking hole 830 thus locking the swing motion of the swing arm 11. Here, in FIG. 5A and FIG. 5B, a numeral 911 indicates a bolt for fixedly connecting the engagement pin 910 to the engaging plate 900, and a numeral 912 indicates a bolt for fixedly connecting the arm locking pin 820 to the elevation member 850.

Here, the arm locking pin 820 according to the present embodiment is formed into a large-sized single pin that is larger in diameter than the engagement pin 910 and forms a tapered surface 825 on the distal end of the large-sized single pin. In this manner, the tapered surface 825 is formed in the distal end of the arm locking pin 820 and hence, the arm locking pin 820 can be easily centered on the arm locking hole 830; that is, the center of the arm locking pin 820 can be easily aligned with the center of the arm locking hole 830. Accordingly, even if there exists a slight misalignment between the arm locking pin 820 and the arm locking hole 830, the arm locking pin 820 can easily be fitted into the arm locking hole 830.

Furthermore, the conveyance apparatus 1 according to the present embodiment includes a rotation locking mechanism 10 that locks the rotation of the turn table 12 on the axis of the turn table 12 except when the turn table 12 is located at the working position 40. Here, the rotation locking mechanism 10 according to the present embodiment is located at a position that is not illustrated in FIG. 4, FIG. 5A, and FIG. 5B. However, as illustrated in FIG. 6A and FIG. 6B, the rotation locking mechanism 10 is provided between the engaging plate 900 and the engaged plate 930.

Hereinafter, with reference to FIG. 6A and FIG. 6B, the rotation locking mechanism 10 is explained. As illustrated in FIG. 6A and FIG. 6B, the rotation locking mechanism 10 according to the present embodiment includes, as a member on the swing arm 11 side of the table rotation mechanism 8, a rotation locking hole 14 provided on the engaged plate 930 in which the engagement holes 920, 920 are formed in such a manner that the rotation locking hole 14 penetrates the engaged plate 930 and a rotation locking pin 15 that is engaged with the rotation locking hole 14 when the turn table 12 is located at the working position 41.

That is, in the rotation locking mechanism 10 according to the present embodiment, the rotation locking hole 14 functions as a first locking hole, and the rotation locking pin 15 functions as a first locking pin.

The rotation locking pin 15 is protruded downwardly at a position corresponding to the rotation locking hole 14 on the distal end side of a hook-shaped piece body 152 biased downwardly by a spring 151. Here, although not illustrated in the drawings, the rotation locking pin 15 is connected to the hook-shaped piece body 152 with the use of a bolt in a detachable manner.

Furthermore, the hook-shaped piece body 152 is arranged so that the hook-shaped piece body 152 is vertically movable in a state that a guide key formed in the back side portion of the hook-shaped piece body 152 is loosely fitted into a guide key seat 153 formed in the inner wall of the arm case 110.

On the other hand, the engaging plate 900 has a protruded portion 950 for releasing the rotation locking pin 15 from the rotation locking hole 14. That is, when the engaging plate 900 is driven by the air cylinder 83 so as to be elevated, the upper end of the protruded portion 950 is brought into contact with the lower end of the hook-shaped piece body 152. When the engaging plate 900 is elevated in such a state, the hook-shaped piece body 152 is elevated, and the rotation locking pin 15 inserted through the rotation locking hole 14 is released from the rotation locking hole 14.

Therefore, when the turn table 12 is not located at the working position 41, as illustrated in FIG. 6A, the engaging plate 900 arranged on the pedestal 6 side of the table rotation mechanism 8 and the engaged plate 930 arranged on the swing arm 11 side of the table rotation mechanism 8 are spaced apart from each other, the power for rotating the turn table 12 on the axis thereof is not transmitted to the turn table 12 and, at the same time, the rotation locking pin 15 biased downwardly is fitted into the rotation locking hole 14.

In such a state, the engaged plate 930 cannot be rotated. Except when the turn table 12 is located at the working position 41, the rotation of the turn table 12 is locked even when the turn table 12 is located at the carrying-in/out position 40 and hence, the turn table 12 is not rotated spontaneously or with external force exerted thereon.

However, when the turn table 12 is located at the working position, the air cylinder 83 is operated to elevate the engaging plate 900 together with the elevation member 850. When the engaging plate 900 is elevated, as illustrated in FIG. 6B, the engagement pins 910, 910 are fitted into the engagement holes 920, 920, respectively and, at the same time, the protruded portion 950 elevates the hook-shaped piece body 152 against the spring 151 to release the rotation locking pin 15 from the rotation locking hole 14. Therefore, the turn table 12 is rotated on the axis thereof if the power is transmitted from the table rotation motor 80 to the turn table 12.

As explained heretofore, the turn table 12 is locked from rotating on the axis thereof except when the turn table 12 is located at the working position 41, and allowed to rotate on the axis thereof only after being located at the working position 41.

Therefore, the posture of the workpiece 5 placed on the turn table 12 located at the carrying-in/out position 40 is not changed azimuthally even when the turn table 12 is conveyed to the working position 41, and operational reliability becomes high in the case where a precise work is performed.

Furthermore, due to such a constitution, the operation of rotating the turn table 12 on the axis of the turn table 12 by the table rotation mechanism 8 and the operation of releasing rotation locking by the rotation locking mechanism 10 are interlocked with each other.

In addition, the engaging/disengaging operation of the rotation locking pin 15 to/from the rotation locking hole 14 in the rotation locking mechanism 10 and the engaging/disengaging operation of the arm locking pin 820 to/from the arm locking hole 830 in the swing arm locking mechanism 19 are interlocked with the operation of the air cylinder 83 that is the actuator of the clutch mechanism 9.

This is because the primary power transmission member 81 interlockingly connected to the table rotation motor 80 is provided on the pedestal 6 side of the table rotation mechanism 8, the secondary power transmission member 82 that transmits power from the primary power transmission member 81 to the turn table 12 located at the working position 41 by way of the clutch mechanism 9 is provided on the swing arm 11 side of the table rotation mechanism 8, and in addition, the rotation locking hole 14 of the rotation locking mechanism 10 and the arm locking hole 830 are provided on members that constitute the secondary power transmission member 82.

Furthermore, as the clutch mechanism 9, the secondary power transmission member 82 is provided with the engagement hole 920, the primary power transmission member 81 is provided with the engagement pin 910 capable of being engaged with and disengaged from the engagement hole 920. As an actuator that operates the engagement pin 910 in a reciprocating manner, the air cylinder 83 is arranged in the vicinity of the primary power transmission member 81. Therefore, the conveyance apparatus 1 is also constituted in a compact manner.

Here, the rotation locking pin 15, the engagement pin 920, and the arm locking pin 820 in the present embodiment are composed of a metallic material that is lower in hardness than the metallic material of which the secondary power transmission member 82 is composed; that is, a metallic material that is lower in hardness than the metallic material of which the engaged plate 930 or the arm forming member 840 that is provided on the swing arm 11 side of the table rotation mechanism 8 is composed. To be more specific, the engaged plate 930 and the arm forming member 840 are composed of steel materials whereas the rotation locking pin 15, the engagement pin 920, and the arm locking pin 820 are composed of copper alloy materials.

Due to such a constitution, the occurrence of sparks attributed to friction between metallic materials can be prevented thus achieving explosion proof in the working booth 4 in which a coating work is performed.

Furthermore, a pin-side material is lower in hardness than a hole-side material and liable to be worn and hence, the rotation locking pin 15, the engagement pin 920, the arm locking pin 820, or the like may be replaced as appropriate when these parts are worn out. For that purpose, these parts are connected to mating parts in a detachable manner.

Here, the explanation that the tapered surface 825 is formed in the distal end of the arm locking pin 820 has been made previously. In order to easily align the center of a pin with the center of a mating hole, in the present embodiment, a tapered surface is formed not only in the arm locking pin 820 but also in the above-mentioned engagement pin 910 or the rotation locking pin 15.

Here, the robot system 3 does not only perform the coating work, but may properly combine the working robot 2 capable of performing predetermined operations with the conveyance apparatus 1 constituted as above.

That is, the conveyance apparatus 1 includes: the swing arm 11 whose distal end portion passes on the carrying-in/out position 40 and the working position 41 while being swung, the positions being provided on the circular trajectory in advance; the turn table 12 that is mounted on the distal end portion of the swing arm 11, the turn table revolving along the circular trajectory and being rotatable on the axis thereof at the mounted position in the horizontal direction in a state that the workpiece 5 is placed on the turn table 12; and the rotation locking mechanism 10 that locks the rotation of the turn table 12 on the axis except when the turn table 12 is located at the working position 41.

Furthermore, the above-mentioned robot system 3 is constituted such that the working robot 2 is fixedly installed on the upper portion of the conveyance apparatus 1. However, the arrangement of the working robot 2 is not limited to the above-mentioned embodiment.

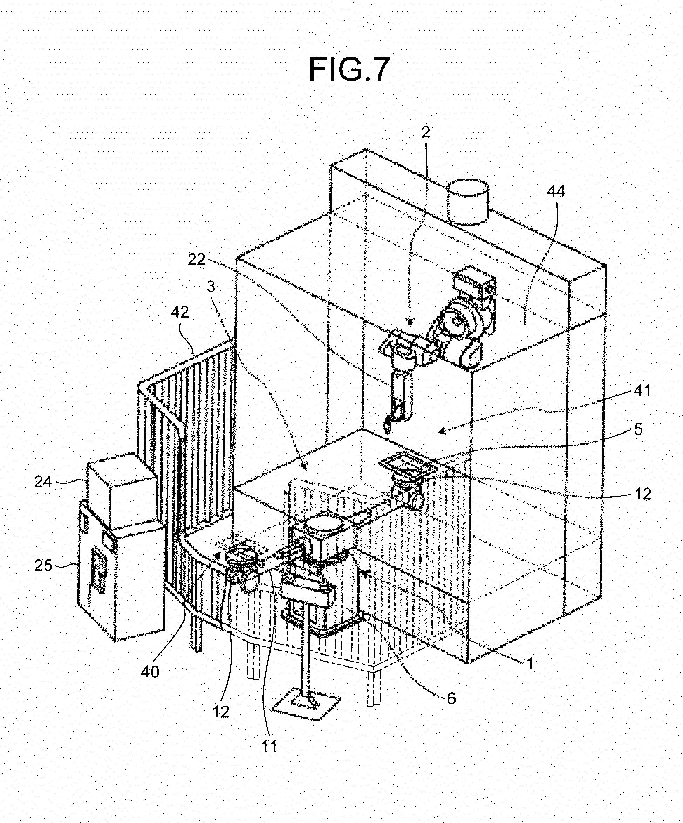

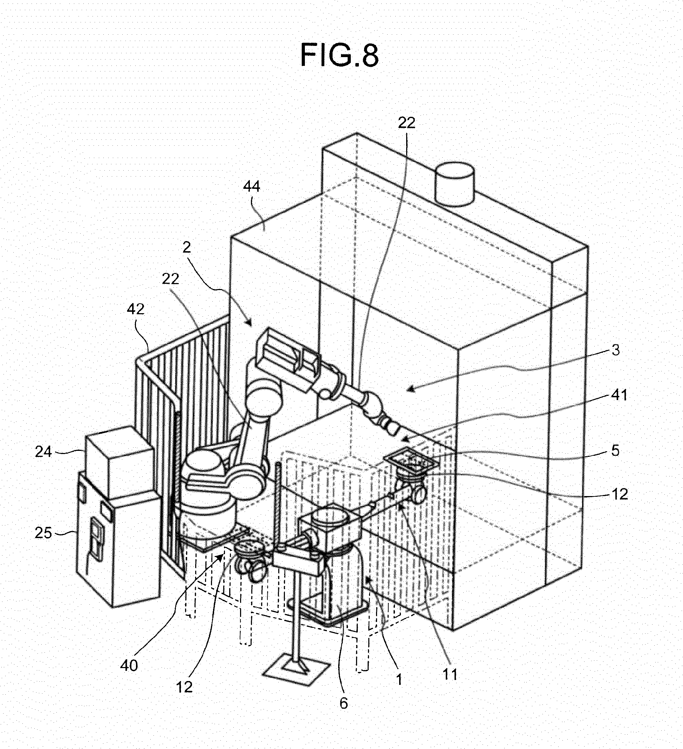

For example, as illustrated in FIG. 7 and FIG. 8, the conveyance apparatus 1 and the working robot 2 can be installed in a spaced-apart manner.

In an example illustrated in FIG. 7, the working robot 2 is installed in the vicinity of a ceiling 44 of the working booth 4 to perform the coating work by extending the robot arm 22 downwardly.

Furthermore, in an example illustrated in FIG. 8, the conveyance apparatus 1 and the working robot 2 are installed adjacent to each other in a direction orthogonal to the direction of a line joining the carrying-in/out position 40 and the working position 41 in a spaced-apart manner with a predetermined distance therebetween.

Additional advantageous effects or modifications of the above-mentioned embodiments can easily be effected by those skilled in the art. Accordingly, the more extensive aspect of the present invention is not limited to the specific detailed and typical embodiments illustrated and described as above. Therefore, various modifications can be made without departing from the gist of the present invention defined by attached claims or equivalents.

### Reference Signs List

- 1: conveyance apparatus
- 2: working robot
- 3: robot system
- 4: working booth
- 5: workpiece
- 6: pedestal
- 7: swing mechanism
- 8: table rotation mechanism
- 9: clutch mechanism
- 10: rotation locking mechanism
- 11: swing arm
- 12: turn table
- 14: rotation locking hole (first locking hole)
- 15: rotation locking pin (first locking pin)
- 19: swing arm locking mechanism
- 22: robot arm
- 40: carrying-in/out position
- 41: working position
- 72: swing motor (first power source)
- 80: table rotation motor (second power source)
- 81: primary power transmission member
- 82: secondary power transmission member
- 83: air cylinder (actuator)
- 820: arm locking pin (second locking pin)
- 830: arm locking hole (second locking hole)
- 910: engagement pin
- 920: engagement hole

## Claims

1. A conveyance apparatus comprising:
a swing arm whose distal end portion passes on a carrying-in/out position and a working position while being swung, the positions being provided on a circular trajectory in advance;
a turn table that is mounted on the distal end portion of the swing arm, the turn table revolving along the circular trajectory and being rotatable on an axis thereof at a mounted position in a horizontal direction in a state that a workpiece is placed on the turn table; and
a rotation locking mechanism that locks rotation of the turn table on the axis except when the turn table is located at the working position.

2. The conveyance apparatus according to claim 1, wherein the rotation locking mechanism comprises:
a first locking hole provided on a member of the swing arm; and
a first locking pin that is engaged with the first locking hole when the turn table is located at the working position.

3. The conveyance apparatus according to claim 2, further comprising:
one or more turn tables that are mounted on the swing arm;
a swing mechanism including a first power source that outputs power for swinging the swing arm; and
a table rotation mechanism that includes a second single power source that outputs power for rotating each of the turn tables, on the axis and selectively transmits the power from the second power source to the turn table located at the working position out of the turn tables, wherein
operation of rotating the turn table on the axis by the table rotation mechanism and operation of releasing rotation locking by the rotation locking mechanism are interlocked with each other.

4. The conveyance apparatus according to claim 3, further comprising:
a pedestal that is located at a center of the circular trajectory and is provided with the first power source and the second power source, wherein
the swing arm linearly extends by way of the pedestal, the turn tables are mounted on both ends of the swing arm, and the carrying-in/out position and the working position are arranged in an opposed manner with the pedestal therebetween, and
at least the second power source of the two power sources provided on the pedestal is arranged on the working position side of the pedestal.

5. The conveyance apparatus according to claim 4, wherein the table rotation mechanism comprises:
a primary power transmission member that is arranged on the pedestal side and is connected to the second power source in an interlocking manner, and
a secondary power transmission member that is arranged on the swing arm side, has the first locking hole, and transmits power from the primary power transmission member to the turn table located at the working position by way of a clutch mechanism, and
the clutch mechanism comprises:
an engagement hole provided on the secondary power transmission member,
an engagement pin provided on the primary power transmission member so that the engagement pin is capable of being engaged with and disengaged from the engagement hole, and
an actuator that operates the engagement pin in a reciprocating manner.

6. The conveyance apparatus according to claim 5, further comprising:
a swing arm locking mechanism that locks swing motion of the swing arm when the turn table is located at the working position, wherein
the swing arm locking mechanism comprises:
a second locking hole provided on the swing arm side, and
a second locking pin that is provided on the pedestal side and is engaged with the second locking hole in an interlocking manner with operation of the actuator of the clutch mechanism when the turn table is located at the working position.

7. The conveyance apparatus according to claim 6, wherein engaging/disengaging operation of the first locking pin to/from the first locking hole in the rotation locking mechanism is further interlocked with the operation of the actuator of the clutch mechanism.

8. The conveyance apparatus according to any one of claims 5 to 7, wherein the engagement pin and the second locking pin are composed of metallic material that is lower in hardness than metallic material of which the secondary power transmission member is composed to prevent occurrence of sparks attributed to friction between the metallic materials.

9. A robot system comprising:
a conveyance apparatus comprising:
a swing arm whose distal end portion passes on a carrying-in/out position and a working position while being swung, the positions being provided on a circular trajectory in advance;
a turn table that is mounted on the distal end portion of the swing arm, the turn table revolving along the circular trajectory and being rotatable on an axis thereof at a mounted position in a horizontal direction in a state that a workpiece is placed on the turn table; and
a rotation locking mechanism that locks rotation of the turn table on the axis except when the turn table is located at the working position, and
a robot that processes a workpiece placed on the turn table at the working position.

10. The robot system according to claim 9, wherein the robot includes a coating robot that performs a coating operation on a surface of the workpiece.
